# EUROPÄISCHE PATENTSCHRIFT

(11) **EP 2 655 917 B1**
(45) Veröffentlichungstag und Bekanntmachung des Hinweises auf die Patenterteilung: **03.09.2014**
(21) Anmeldenummer: 11793818.3
(22) Anmeldetag: 13.12.2011
(51) Int. Cl.: F16D 65/14

(54) **REIBUNGSBREMSE**
FRICTION BRAKE
FREIN À FRICTION

(30) Priorität: 23.12.2010 DE 102010064042
(43) Veröffentlichungstag der Anmeldung: 30.10.2013
(73) Patentinhaber: Robert Bosch GmbH, 70442 Stuttgart (DE)
(72) Erfinder: BAUMANN, Dietmar, 71282 Hemmingen (DE)
(86) Internationale Anmeldenummer: PCT/EP2011/072522
(87) Internationale Veröffentlichungsnummer: WO 2012/084589

(56) Entgegenhaltungen:
- EP-A1- 1 972 822
- DE-A1- 10 328 242
- DE-A1-102007 016 250

## Beschreibung

Die Erfindung betrifft eine Reibungsbremse wie z.B. aus DE-A-10 2007 016250 bekannt, mit einem Reibbremsbelag und mit einer Betätigungseinrichtung, mit der der Reibbremsbelag gegen einen Bremskörper drückbar ist, mit den Merkmalen des Oberbegriffs des Anspruchs 1. Die Reibungsbremse ist insbesondere eine Fahrzeugbremse, beispielsweise eine Scheibenbremse oder auch eine Trommelbremse. Im Falle einer Scheibenbremse ist der Bremskörper eine Bremsscheibe, im Fall einer Trommelbremse eine Bremstrommel.

### Stand der Technik

Es sind elektromechanische Reibungsbremsen als Radbremsen für Kraftfahrzeuge bekannt, die vielfach als Scheibenbremsen ausgeführt sind. Bekannte derartige Reibungsbremsen weisen eine elektromechanische Betätigungseinrichtung mit einem Elektromotor und einem Spindeltrieb zu Umsetzung einer Rotationsbewegung des Elektromotors in eine translatorische Bewegung zum Drücken eines Reibbremsbelags gegen einen Bremskörper, im Falle einer Scheibenbremse also gegen eine Bremsscheibe, auf.

Es sind auch selbstverstärkende derartige Scheibenbremsen bekannt. Bei ihnen ist der Reibbremsbelag in einer Drehrichtung des Bremskörpers beweglich, wobei es nicht zwingend ist, dass sich der Bremskörper auf einer Kreisbahn um eine Drehachse der Bremsscheibe bewegen kann. Die Bewegung des Bremskörpers kann beispielsweise auch in Richtung einer Sehne zur Bremsscheibe erfolgen. Der Reibbremsbelag stützt sich an einer Keilschräge zur Bremsscheibe ab. Wird der Reibbremsbelag bei betätigter Bremse von der Betätigungseinrichtung gegen die Bremsscheibe gedrückt, übt die drehende Bremsscheibe eine Reibungskraft auf den Reibbremsbelag aus, die diesen in Richtung eines enger werdenden Keilspalts zwischen der Keilschräge und der Bremsscheibe beaufschlagt. Aufgrund des Keilprinzips übt die Keilschräge eine Abstützkraft auf den Reibbremsbelag aus, die eine Komponente normal zur Bremsscheibe aufweist. Diese Komponente der Abstützkraft normal zur Bremsscheibe erhöht eine Spannkraft, mit der der Reibbremsbelag gegen die Bremsscheibe gedrückt wird, d. h. eine Bremskraft wird erhöht. Die Keilschräge und ein zugehöriger Keil auf einer der Bremsscheibe abgewandten Rückseite des Reibbremsbelags können als Keilmechanismus und als Selbstverstärkungseinrichtung aufgefasst werden.

### Offenbarung der Erfindung

Auch bei der erfindungsgemäßen Reibungsbremse mit den Merkmalen des Oberbegriffs des Anspruchs 1 ist der Reibbremsbelag in Drehrichtung eines Bremskörpers beweglich. Ein Kraft-Spannungs-Wandler stützt den Reibbremsbelag gegen eine Mitbewegung mit dem drehenden Bremskörper ab. Der Kraft-Spannungs-Wandler wandelt eine Stützkraft, mit der sich der Reibbremsbelag an ihm abstützt, in eine elektrische Spannung um, wobei unter elektrischer Spannung auch ein elektrischer Strom verstanden werden soll. Die elektrische Spannung des Kraft-Spannungs-Wandlers kann der Betätigungseinrichtung zugeführt werden, um die Spannkraft, also die Kraft, mit der der Reibbremsbelag gegen den Bremskörper gedrückt wird, zu erhöhen. Dadurch ist eine Bremskraft- bzw. Selbstverstärkung möglich. Ein zusätzlicher Vorteil ist, dass der Kraft-Spannungs-Wandler als Bremskraft-Sensor nutzbar ist: Durch Messung der elektrischen Spannung des Kraft-Spannungs-Wandlers ist die Stützkraft, mit der sich der Reibbremsbelag an ihm abstützt, und damit die Bremskraft der Reibungsbremse, ermittelbar. Es ist kein extra Sensor zur Messung der Bremskraft notwendig. Aus der Bremskraft und der auf den Reibbremsbelag ausgeübten Spannkraft ist zudem der Reibwert zwischen dem Reibbremsbelag und dem Bremskörper ermittelbar. Vorzugsweise stützt sich der Reibbremsbelag in beiden Drehrichtungen des Bremskörpers an einem oder an verschiedenen Kraft-Spannungs-Wandlern ab, um eine Selbstverstärkung in beiden Drehrichtungen des Bremskörpers zu ermöglichen.

Die Unteransprüche haben vorteilhafte Ausgestaltungen und Weiterbildungen der im Anspruch 1 angegebenen Erfindung zum Gegenstand.

Anspruch 3 sieht vor, dass die Betätigungseinrichtung einen Spannungs-Kraft-Wandler aufweist, der eine elektrische Spannung oder einen elektrischen Strom in eine Kraft wandelt, mit der der Reibbremsbelag gegen den Bremskörper gedrückt wird. Der Spannungs-Kraft-Wandler ermöglicht eine einfache Einkopplung der elektrischen Spannung, die der Kraft-Spannungs-Wandler erzeugt, wenn sich der Reibbremsbelag bei betätigter Reibungsbremse und drehendem Bremskörper an ihm abstützt. Diese Ausgestaltung der Erfindung ermöglicht eine einfache Selbstverstärkung. Ein weiterer Vorteil ist eine hohe Dynamik der Bremsbetätigung.

Denkbar sind beispielsweise induktive, eine Magnetspule aufweisende oder kapazitive Wandler mit beispielsweise einer beweglichen Kondensatorplatte. Vorzugsweise weisen der Kraft-Spannungs-Wandler und/oder der Spannungs-Kraft-Wandler ein (oder mehrere) Piezoelement auf. Ein Piezoelement ist sowohl als Kraft-Spannungs-Wandler verwendbar, weil es bei Beaufschlagung mit einer Kraft eine elektrische Spannung erzeugt, als auch als Spannungs-Kraft-Wandler, weil es sich bei Anlegen einer elektrischen Spannung verformt, wodurch eine Kraft erzeugbar ist. Piezoelemente sind kompakt, robust und nahezu verschleißfrei, ihre elektrische Leistungsaufnahme ist gering.

Anspruch 5 sieht ein elektronisches Steuergerät vor, das dem Kraft-Spannungs-Wandler und dem Spannungs-Kraft-Wandler zwischengeschaltet ist. Das elektronische Steuergerät ermöglicht eine Regelung der elektrischen Spannung, die vom Kraft-Spannungs-Wandler, an dem sich der Reibbremsbelag abstützt, auf den Spannungs-Kraft-Wandler übertragen wird, der den Reibbremsbelag gegen den Bremskörper drückt. Auf diese Weise lässt sich die Selbstverstärkung der erfindungsgemäßen Reibungsbremse regeln. Da aus der Spannung, die der Kraft-Spannungs-Wandler erzeugt, und der Kraft, mit der der Reibbremsbelag gegen den Bremskörper gedrückt wird, der Reibwert zwischen dem Reibbremsbelag und dem Bremskörper ermittelbar ist, ist mit dem elektronischen Steuergerät eine Regelung der Selbstverstärkung der erfindungsgemäßen Reibungsbremse in Abhängigkeit vom Reibwert möglich. Das elektronische Steuergerät kann zugleich die Bremskraft der Reibungsbremse bzw. die Spannkraft, mit der der Reibbremsbelag gegen den Bremskörper gedrückt wird, regeln. Der Begriff "Regelung" soll hier auch eine Steuerung einschließen.

### Kurze Beschreibung der Zeichnung

Die Erfindung wird nachfolgend anhand in der Zeichnung dargestellter Ausführungsformen näher erläutert. Die Figuren zeigen drei Ausführungsformen erfindungsgemäßer Reibungsbremsen. Die Figuren sind als schematisierte und vereinfachte Darstellungen zum Verständnis und zur Erläuterung der Erfindung zu verstehen.

### Ausführungsformen der Erfindung

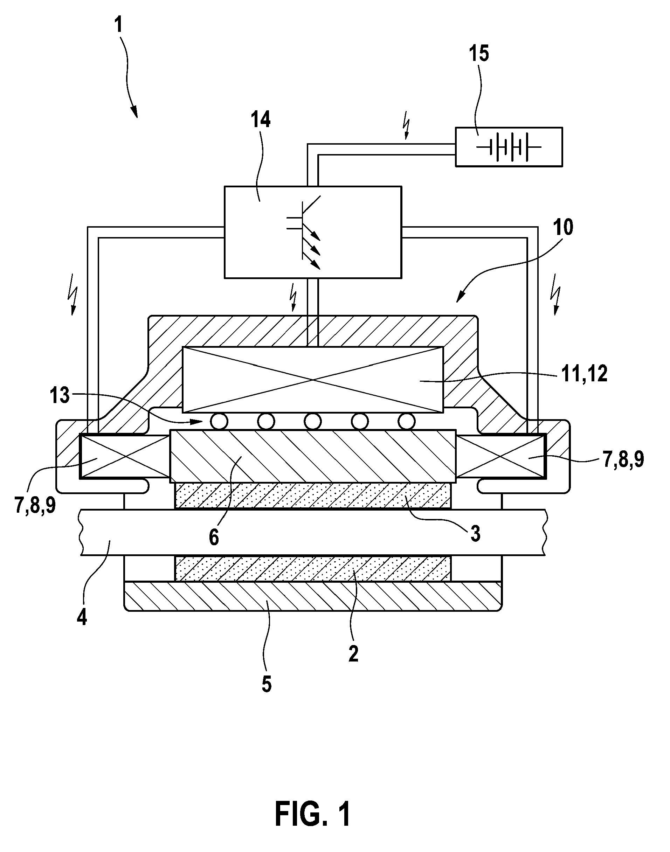

Die in Figur 1 dargestellte erfindungsgemäße Reibungsbremse 1 ist eine Radbremse für ein Kraftfahrzeug, also eine Fahrzeugbremse. Sie weist die Bauform einer Scheibenbremse auf. Die Reibungsbremse 1 weist zwei Reibbremsbeläge 2, 3 auf, die beiderseits einer Bremsscheibe 4 in einem Bremssattel 5 angeordnet sind. Die Bremsscheibe 4 kann verallgemeinernd auch als zu bremsender Bremskörper aufgefasst werden. Einer der beiden Reibbremsbeläge 2 ist fest im Bremssattel 5 angeordnet, der andere Reibbremsbelag 3 ist in einer Umfangsrichtung, also in beiden Drehrichtungen der Bremsscheibe 4 im Bremssattel 5 beweglich. Auf einer der Bremsscheibe 4 abgewandten Rückseite weist der bewegliche Reibbremsbelag 3 einen Belagträger 6 auf, der sich an beiden in Umfangsrichtung gelegenen Enden an je einem Piezoelement 7 abstützt, das einen Kraft-Spannungs-Wandler 8 und zugleich einen Bremskraftsensor 9 bildet.

Als Betätigungseinrichtung 10 oder jedenfalls als Bestandteil einer Betätigungseinrichtung 10 weist die Reibungsbremse 1 ein weiteres Piezoelement 11 auf, das auf einer der Bremsscheibe 4 abgewandten Rückseite des Belagträgers 6 im Bremssattel 5 angeordnet ist. Damit sich der Belagträger 6 mit dem Reibbremsbelag 3 in Umfangsrichtung der Bremsscheibe 4 bewegen kann ist er in seiner Bewegungsrichtung gegenüber dem Piezoelement 11 beweglich. In der Zeichnung ist eine Wälzlagerung 13 zur beweglichen Abstützung des Belagträgers 6 am Piezoelement 11 gezeigt, denkbar ist auch eine Gleitlagerung, eine Schiebeführung etc. Diese Piezoelement 11 bildet einen Spannungs-Kraft-Wandler 12.

Die Piezoelemente 7, die den beweglichen Reibbremsbelag 3 über seinen Belagträger 6 im Bremssattel 5 gegen ein Mitdrehen mit der Bremsscheibe 4 abstützen, sind elektrisch mit einem elektronischen Steuergerät 14 verbunden, an das auch das Piezoelement 11 angeschlossen ist, welches den Spannungs-Kraft-Wandler 12 und zugleich die Betätigungseinrichtung 10 bildet. Das elektronische Steuergerät 14 ist an ein elektrisches Bordnetz 15 eines Kraftwagens angeschlossen, in welchem die Reibungsbremse 1 als Radbremse Verwendung findet.

Das elektronische Steuergerät 14 regelt eine Betätigungskraft- bzw. Spannkraft bzw. die Bremskraft der Reibungsbremse 1. Zu einer Bremsbetätigung wird eine elektrische Spannung an das Piezoelement 11 angelegt, das den Spannungs-Kraft-Wandler 12 bildet. Durch die angelegte Spannung vergrößert das Piezoelement 11 seine Dicke und drückt über den Belagträger 6 den beweglichen Reibbremsbelag 3 gegen die Bremsscheibe 4. Durch das Drücken des beweglichen Reibbremsbelags 3 gegen die Bremsscheibe 4 wird der Bremssattel 5, welcher als Schwimmsattel ausgebildet ist, quer zur Bremsscheibe 4 verschoben und drückt den feststehenden Reibbremsbelag 2 gegen die andere Seite der Bremsscheibe 4, die dadurch gebremst wird.

Dreht sich die Bremsscheibe 4, übt sie eine Reibungskraft auf die beiden Reibbremsbeläge 2, 3 in ihrer Umfangsrichtung aus. Der beweglich Reibbremsbelag 3, stützt sich über seinen Belagträger 6 an den Piezoelementen 7, die die Kraft-Spannungs-Wandler 8 bilden, gegen Mitdrehen mit der Bremsscheibe 4, ab, so dass das Piezoelement 7, welches sich in der Drehrichtung der Bremsscheibe 4 vom Belagträger 6 befindet, mit der Reibungskraft beaufschlagt wird, die die drehende Bremsscheibe 4 auf den bei betätigter Reibungsbremse 1 gegen sie gedrückten, beweglichen Reibbremsbelag 3 ausübt. Das Piezoelement 7 stützt über den Belagträger 6 den Reibbremsbelag 3 mit einer Stützkraft ab, die gleich groß wie die Reibungskraft zwischen der Bremsscheibe 4 und dem Reibbremsbelag 3 und der Reibungskraft entgegengerichtet ist. Die auf das den Kraft-Spannungs-Wandler 8 bildende Piezoelement 7 übertragene Reibungskraft verformt das Piezoelement 7 und erzeugt eine elektrische Spannung am Piezoelement 7, die dem elektronischen Steuergerät 14 zugeführt wird. Das elektronische Steuergerät 14, das den Piezoelementen 7, 11 zwischengeschaltet ist, koppelt die elektrische Spannung des den Reibbremsbelag 3 in Umfangsrichtung abstützenden Piezoelements 7 ein und überträgt sie auf das Piezoelement 11, welches die Betätigungseinrichtung 10 bildet. Die an letzteres Piezoelement 11 angelegte elektrische Spannung und damit die Spannkraft, mit der es den Reibbremsbelag 3 gegen die Bremsscheibe 4 drückt, wird dadurch erhöht. Die Reibungsbremse 11 weist eine piezoelektrische Selbstverstärkung auf. Die Höhe der Selbstverstärkung ist durch die Höhe der elektrischen Spannung, welche das elektronische Steuergerät 14 einkoppelt, regelbar.

Die Spannung, die die Abstützung des Reibbremsbelags 3 über seinen Belagträger 6 an dem den Kraft-Spannungs-Wandler 8 bildenden Piezoelement 7 bewirkt, ist ein Maß für die Bremskraft, die die Reibungsbremse 1 auf die Bremsscheibe 4 ausübt. Deswegen bilden die Piezoelemente 7, die die Kraft-Spannungs-Wandler 8 bilden, zugleich auch Bremskraftsensoren 9. Aus der Bremskraft und der Spannkraft, mit der der Reibbremsbelag 3 gegen die Bremsscheibe 4 gedrückt wird, und der sich aus der elektrischen Spannung ergibt, die das elektronische Steuergerät 14 an das Piezoelement 11 der Betätigungseinrichtung 10 anlegt, lässt sich ein Reibwert µ errechnen, der zwischen dem beweglichen Reibbremsbelag 3 und der Bremsscheibe 4 herrscht. Das ermöglicht in einfacher Weise eine Regelung der Höhe der Selbstverstärkung der Reibungsbremse 1 in Abhängigkeit u. a. vom Reibwert µ.

Außer einer hohen Dynamik weist das Piezoelement 11, das den Spannungs-Kraft-Wandler 12 bildet, eine geringe elektrische Leistungsaufnahme auf, weil es sich durch Anlegen einer elektrischen Spannung nahezu ohne oder mit nur geringer Stromaufnahme verformt. Die elektrische Leistungsaufnahme und damit die Belastung des elektrischen Bordnetzes 15 durch die erfindungsgemäße Reibungsbremse 1 ist deswegen gering. Ein weiterer Vorteil ist, dass die Piezoelemente 7, 11 nahezu verschleißfrei sind und dass die Reibungsbremse 1 nur wenig bewegliche Mechanik aufweist und dadurch nahezu verschleißfrei und unempfindlich für Verschmutzungen ist. Außer einem Wechseln der Reibbremsbeläge 2, 3 ist die Reibungsbremse 1 nahezu wartungsfrei.

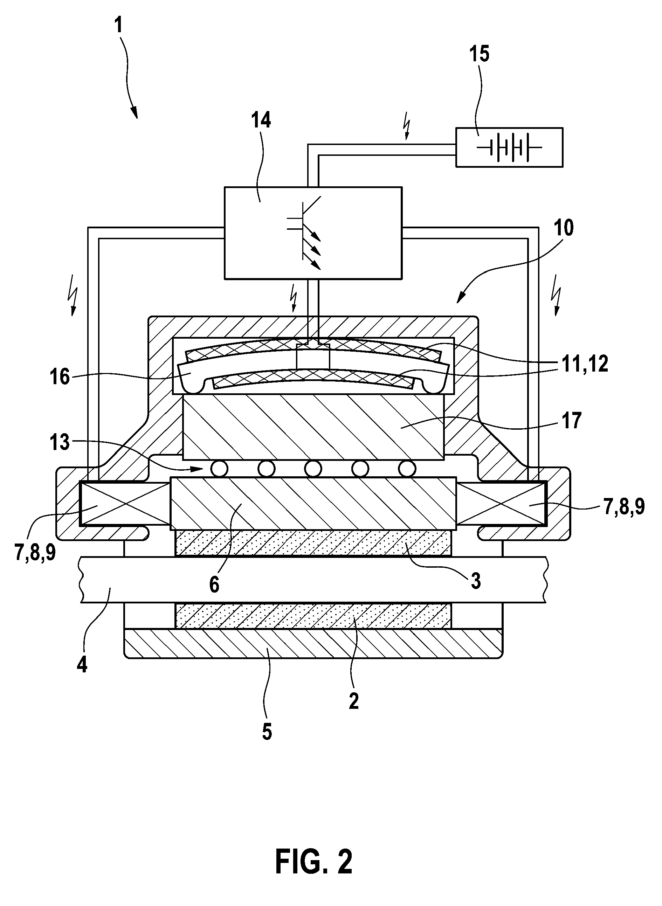

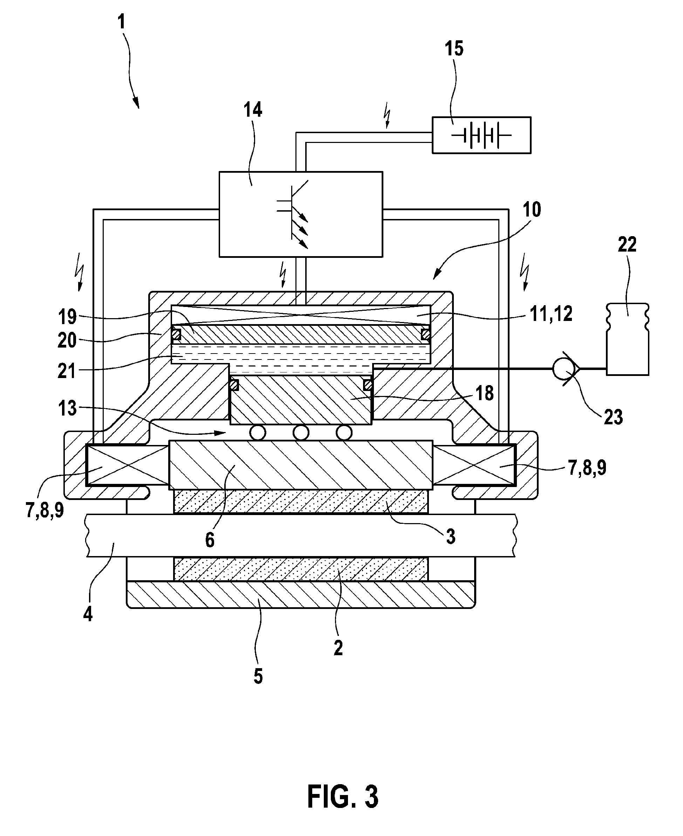

Bei der nachfolgenden Erläuterung der Figuren 2 und 3 werden übereinstimmende Bauteile mit gleichen Bezugszahlen wie in Figur 1 bezeichnet. Die Betätigungseinrichtung 10 der Reibungsbremse 1 aus Figur 2 weist ein balken- oder plattenförmiges Biegelement 16 auf, auf dem beidseitig Piezoelemente 11 als Spannungs-Kraft-Wandler 12 angeordnet sind. Die Piezoelemente 11 sind scherfest mit dem Biegelement 16 verbunden, durch Anlegen einer elektrischen Spannung mit dem elektronischen Steuergerät 14 an die beiden Piezoelemente 11 verformen sich diese und biegen das Biegeelement 16 bzw. vergrößern seine Krümmung.

Über eines der beiden Piezoelemente 11 stützt sich das Biegelement 16 in seiner Mitte am Bremssattel 5 ab. Enden oder Ränder des Biegelements 16 liegen an einem Zwischenstück 17 an, das nach Art eines Kolbens quer zur Bremsscheibe 4 verschiebbar im Bremssattel 5 geführt ist. Über eine Wälzlagerung 13, Gleitlagerung, Schiebeführung etc. liegt das Zwischenstück 17 an der Rückseite des Belagträgers 6 des beweglichen Reibbremsbelags 3 an. Durch Anlegen einer elektrischen Spannung an die beiden Piezoelemente 11 des Biegeelements 16 lässt sich das Biegeelement 16 biegen bzw. seine Krümmung vergrößern. Über das Zwischenstück 17 drückt das Biegeelement 16 dadurch den beweglichen Reibbremsbelag 1 gegen die Bremsscheibe 4, wodurch die Reibungsbremse 1 betätigt wird. Das Biegeelement 16 mit seinen beiden Piezoelementen 11 sind Bestandteil der Betätigungseinrichtung 10 der Reibungsbremse 1 aus Figur 2. Das Biegelement 16 vergrößert einen Stellweg, den die Piezoelemente 11 durch ihre Verformung bei Anlegen einer elektrischen Spannung erzeugen.

Im Übrigen ist die Reibungsbremse 1 aus Figur 2, insbesondere die Selbstverstärkung über die Piezoelemente 7, welche die Kraft-Spannungs-Wandler 8 und die zugleich die Bremskraftsensoren 9 bilden und die den beweglichen Reibbremsbelag 3 gegen Mitdrehen mit der Bremsscheibe 4 abstützen und hinsichtlich der piezoelektrischen Selbstverstärkung gleich ausgebildet und funktioniert in gleicher Weise wie die Reibungsbremse 11 aus Figur 1, auf deren Erläuterungen insoweit verwiesen wird. Zum Biegen des Biegeelements 16 und damit zur Betätigung der Reibungsbremse 1 genügt eines der Piezoelemente 11. Das zweite Piezoelement 11 auf der anderen Seite des Biegelements 16 dient einer Temperaturkompensation. Außerdem sind eine Biegekraft und/oder ein Verformungsweg, d. h. die Spannkraft und/oder der Stellweg, durch das zweite Piezoelement 11 erhöht.

Die Betätigungseinrichtung 10 der erfindungsgemäßen Reibungsbremse 1 aus Figur 3 weist zwei Kolben 18, 19 auf, die vergleichbar den Kolben einer hydraulischen Scheibenbremse quer zur Bremsscheibe 4 verschiebbar im Bremssattel 5 aufgenommen sind. Der Bremssattel 5 ist zu diesem Zweck als Zylinder 20 ausgebildet, er enthält eine Hydraulikflüssigkeit 21 zwischen den beiden Kolben 18, 19. An einem der beiden Kolben 18 liegt wie am Piezoelement 11 aus Figur 1 und am Zwischenstück 17 aus Figur 2 über eine Wälzlagerung 13, Gleitlagerung, Schiebeführung etc. die Rückseite des Belagträgers 6 des beweglichen Reibbremsbelags 3 an. Der andere Kolben 19 weist auf seiner der Bremsscheibe 4 abgewandten Rückseite das Piezoelement 11 auf, das den Spannungs-Kraft-Wandler 12 bildet. Der dem Piezoelement 11 zugeordnete Kolben 19 weist einen größeren Durchmesser als der dem Reibbremsbelag 3 zugeordnete Kolben 18 auf, so dass eine Wegübersetzung vom Piezoelement 11 zum Reibbremsbelag 3 erfolgt. Der Zylinder 20 des Bremssattels 5 ist entsprechend der Durchmesser der Kolben 18, 19 durchmessergestuft. Die Zylinder-Kolben-Anordnung 18, 19, 20 bildet einen hydraulischen Wegübersetzer, der eine Dickenänderung des Piezoelements 11 bei Anlegen einer elektrischen Spannung und damit einen Stell- bzw. Betätigungsweg vergrößert. Das Piezoelement 11, die beiden Kolben 18, 19 und der Zylinder 20 bilden die Betätigungseinrichtung 10 der Reibungsbremse 1 aus Figur 3 oder sind jedenfalls Bestandteil der Betätigungseinrichtung 10.

Um einen Belagverschleiß der Reibbremsbeläge 2, 3 auszugleichen ist ein Vorratsbehälter 22 mit Hydraulikflüssigkeit über ein in Richtung des Zylinders 20 durchströmbares Rückschlagventil 23 an den Zylinder 20 angeschlossen. Denkbar ist der Anschluss des Vorratsbehälters 23 an den Zylinder 20 auch mit einer sog. Schnüffelbohrung, die bei einer Bewegung des Kolbens 19 verschlossen wird, wie sie von Hauptbremszylindern hydraulischer Fahrzeugbremsanlagen bekannt ist, durch ein Zentralventil, das den Vorratsbehälter 23 bei einer Bewegung eines der Kolben 18, 19 hydraulisch vom Zylinder 20 trennt, wie es ebenfalls von Hauptbremszylindern bekannt ist, oder durch ein Magnetventil, das vom elektronischen Steuergerät 14 gesteuert wird (nicht dargestellt).

Im Übrigen ist die Reibungsbremse 1 aus Figur 3 gleich ausgebildet und funktioniert in gleicher Weise wie die Reibungsbremse 1 aus Figur 1, so dass zur Vermeidung von Wiederholungen zur Erläuterung von Figur 3 ergänzend auf die Erläuterungen der Figur 1 verwiesen wird.

Die piezoelektrischen Betätigungseinrichtungen 10 lassen sich auch unabhängig von den Piezoelementen 7, die die Kraft-Spannungs-Wandler 8 bilden, an Reibungsbremsen ohne Selbstverstärkung oder mit anderen Selbstverstärkungen verwirklichen.

## Patentansprüche

1. Reibungsbremse, mit einem Reibbremsbelag (3) und mit einer Betätigungseinrichtung (10), mit der der Reibbremsbelag (3) zu Betätigung der Reibungsbremse (1) gegen einen Bremskörper (4) drückbar ist, wobei der Reibbremsbelag (3) in Drehrichtung des Bremskörpers (4) beweglich ist, **dadurch gekennzeichnet, dass** der Reibbremsbelag (3) einen Kraft-Spannungs-Wandler (8) aufweist, an dem sich der Reibbremsbelag (3) gegen Mitdrehen mit dem Bremskörper (4) abstützt.

2. Reibungsbremse nach Anspruch 1, **dadurch gekennzeichnet, dass** der Kraft-Spannungs-Wandler (8) ein Piezoelement (7) ist.

3. Reibungsbremse nach Anspruch 1, **dadurch gekennzeichnet, dass** die Betätigungseinrichtung (10) einen Spannungs-Kraft-Wandler (12) aufweist, der eine elektrische Spannung des Kraft-Spannungs-Wandlers (8) in eine Spannkraft wandelt, die den Reibbremsbelag (3) gegen den Bremskörper (4) drückt.

4. Reibungsbremse nach Anspruch 3, **dadurch gekennzeichnet, dass** der Spannungs-Kraft-Wandler (12) ein Piezoelement (11) ist.

5. Reibungsbremse nach Anspruch 3, **dadurch gekennzeichnet, dass** dem Kraft-Spannungs-Wandler (8) und dem Spannungs-Kraft-Wandler (12) ein elektronisches Steuergerät (14) zwischengeschaltet ist.

6. Reibungsbremse nach Anspruch 1, **dadurch gekennzeichnet, dass** der Kraft-Spannungs-Wandler (8) einen Bremskraftsensor (9) bildet.

7. Reibungsbremse nach Anspruch 3, **dadurch gekennzeichnet, dass** die Betätigungseinrichtung (10) ein Biegeelement (16) aufweist, welches durch Biegen den Reibbremsbelag (3) gegen den Bremskörper (4) drückt, und dass der Spannungs-Kraft-Wandler (12) bei Anlegen einer elektrischen Spannung das Biegeelement (16) biegt.

8. Reibungsbremse nach Anspruch 7, **dadurch gekennzeichnet, dass** das Biegelement (16) auf beiden Seiten einen Spannungs-Kraft-Wandler (12) aufweist.

9. Reibungsbremse nach Anspruch 3, **dadurch gekennzeichnet, dass** die Betätigungseinrichtung (10) einen Wegübersetzer (16; 18, 19, 20) aufweist, der eine Bewegung des Spannungs-Kraft-Wandlers (12) übersetzt.

10. Reibungsbremse nach Anspruch 9, **dadurch gekennzeichnet, dass** die Betätigungseinrichtung (10) einen hydraulischen Wegübersetzer (18, 19, 20) aufweist.

## Claims

1. Friction brake, having a friction brake lining (3) and an actuating device (10), which serves to press friction brake lining (3) against a brake body (4) for actuation of the friction brake (1), wherein the friction brake lining (3) is moveable in the direction of rotation of the brake body (4), **characterized in that** the friction brake lining (3) comprises a force-voltage transducer (8), against which the friction brake lining (3) is braced to prevent it rotating together with the brake body (4).

2. Friction brake according to Claim 1, **characterized in that** the force-voltage transducer (8) is a piezoelectric element (7).

3. Friction brake according to Claim 1, **characterized in that** the actuating device (10) comprises a voltage-force transducer (12), which converts an electrical voltage of the force-voltage transducer (8) into an application force, which presses the friction brake lining (3) against the brake body (4).

4. Friction brake according to Claim 3, **characterized in that** the voltage-force transducer (12) is a piezoelectric element (11).

5. Friction brake according to Claim 3, **characterized in that** an electronic control unit (14) is interconnected between the force-voltage transducer (8) and the voltage force transducer (12).

6. Friction brake according to Claim 1, **characterized in that** the force-voltage transducer (8) forms a brake force sensor (9).

7. Friction brake according to Claim 3, **characterized in that** the actuating device (10) comprises a bending element (16), which through bending presses the friction brake lining (3) against the brake body (4), and that when an electrical voltage is applied the voltage-force transducer (12) bends the bending element (16).

8. Friction brake according to Claim 7, **characterized in that** the bending element (16) comprises a voltage-force transducer (12) on both sides.

9. Friction brake according to Claim 3, **characterized in that** the actuating device (10) comprises a travel transmitter (16, 18, 19, 20), which transmits a movement of the voltage-force transducer (12).

10. Friction brake according to Claim 9, **characterized in that** the actuating device (10) comprises a hydraulic travel transmitter (18, 19, 20).

## Revendications

1. Frein à friction, comprenant une garniture de frein à friction (3) et comprenant un système d'actionnement (10) à l'aide duquel la garniture de frein à friction (3) peut être pressée contre un corps de frein (4) en vue de l'actionnement du frein à friction (1), la garniture de frein à friction (3) étant mobile dans le sens de rotation du corps de frein (4), **caractérisé en ce que** la garniture de frein à friction (3) comprend un convertisseur force/tension (8) contre lequel s'appuie la garniture de frein à friction (3) afin de ne pas tourner avec le corps de frein (4).

2. Frein à friction selon la revendication 1, **caractérisé en ce que** le convertisseur force/tension (8) est un élément piézo-électrique (7).

3. Frein à friction selon la revendication 1, **caractérisé en ce que** le système d'actionnement (10) comprend un convertisseur tension/force (12) qui convertit une tension électrique du convertisseur force/tension (8) en une force de serrage qui presse la garniture de frein à friction (3) contre le corps de frein (4).

4. Frein à friction selon la revendication 3, **caractérisé en ce que** le convertisseur tension/force (12) est un élément piézo-électrique (11).

5. Frein à friction selon la revendication 3, **caractérisé en ce qu**'un appareil de commande électronique (14) est interposé entre le convertisseur force/tension (8) et le convertisseur tension/force (12).

6. Frein à friction selon la revendication 1, **caractérisé en ce que** le convertisseur force/tension (8) forme un capteur de force de freinage (9).

7. Frein à friction selon la revendication 3, **caractérisé en ce que** le système d'actionnement (10) comprend un élément de flexion (16), lequel presse par flexion la garniture de frein à friction (3) contre le corps de frein (4), et **en ce que** le convertisseur tension/force (12) courbe l'élément de flexion (16) lors de l'application d'une tension électrique.

8. Frein à friction selon la revendication 7, **caractérisé en ce que** l'élément de flexion (16) comprend un convertisseur tension/force (12) des deux côtés.

9. Frein à friction selon la revendication 3, **caractérisé en ce que** le système d'actionnement (10) comprend un multiplicateur de course (16 ; 18, 19, 20) qui multiplie un déplacement du convertisseur tension/force (12).

10. Frein à friction selon la revendication 9, **caractérisé en ce que** le système d'actionnement (10) comprend un multiplicateur hydraulique de course (18, 19, 20).
